# EUROPEAN PATENT SPECIFICATION

(11) **EP 2 355 440 B1**
(45) Date of publication and mention of the grant of the patent: **24.10.2012**
(21) Application number: 10183078.4
(22) Date of filing: 30.09.2010
(51) Int. Cl.: H04L 29/06, H04L 29/08, A63F 13/12, H04M 1/725

(54) **System, terminal, server, and method for providing augmented reality**
System, Endgerät, Server und Verfahren zur Bereitstellung von erweiterter Realität
Système, terminal, serveur et procédé pour la fourniture d'une réalité améliorée

(30) Priority: 29.01.2010 KR 20100008436
(43) Date of publication of application: 10.08.2011
(73) Proprietor: Pantech Co., Ltd., Seoul 121-792 (KR)
(72) Inventor: Kim, Wang Chum, Seoul 121-792 (KR)
(74) Representative: Herzog, Markus

(56) References cited:
- US-A1- 2009 081 959

## Description

### CROSS-REFERENCE TO RELATED APPLICATION

This application claims priority from and the benefit of Korean Patent Application No. 10-2010-0008436, filed on January 29, 2010.

### BACKGROUND

### 1. Field

This disclosure relates to a system, a terminal, a server, and a method for providing an augmented reality.

### 2. Discussion of the Background

In general, augmented reality indicates a technology for augmenting a real world viewed by user's eyes with additional information by combining the viewed real world with a virtual world and showing the result as an image. As a method for combining the virtual world with the real world using the augmented reality technology, a method is developed using a marker having a pattern or using an object, such as a building existing in the real world.

In the method of using the marker, a real world including the marker having a white pattern on a black background is photographed by a camera provided in a terminal, the white pattern of the photographed marker is recognized, information data corresponding to the recognized pattern is combined with an image of the real world, and the result is displayed on a screen. However, the information data may be provided only if the marker is recognized.

In the method of using the object, an object of the real world is recognized instead of the marker, information data corresponding to the recognized object is combined with an image of the real world, and the result is displayed on a screen. However, presentation of information associated with the recognized object may be problematic, and the information data is provided only if the object is recognized.

### SUMMARY

This disclosure relates to provision of environment information data in a direction viewed by a user from a current position on the basis of the user's current position and direction without recognizing a marker or an object by managing information data to be provided for the user in the form of a database organized according to a section. Thus, this disclosure also provides a system, a terminal, a server, and a method for providing an augmented reality, capable of providing environment information data without recognizing a marker or an object.

Additional features of the invention will be set forth in the description which follows, and in part will be apparent from the description, or may be learned by practice of the invention.

An exemplary embodiment provides a system to provide an augmented reality according to claim 1.

An exemplary embodiment provides a terminal to provide an augmented reality according to claim 4.

An exemplary embodiment provides a server to provide an augmented reality according to claim 11.

An exemplary embodiment provides a method for providing an augmented reality according to claim 18.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram schematically illustrating a configuration of a system for providing an augmented reality according to an exemplary embodiment.

FIG. 2 is a diagram illustrating a shape of a section according to an exemplary embodiment;

FIG. 3 is a diagram schematically illustrating a configuration of a terminal for providing an augmented reality according to an exemplary embodiment.

FIG. 4 is a diagram schematically illustrating a configuration of a server for providing an augmented reality according to an exemplary embodiment.

FIG. 5 is a flowchart illustrating a method for providing an augmented reality according to an exemplary embodiment.

FIG. 6 is a flowchart illustrating a method for providing an augmented reality according to another embodiment.

FIG. 7 is a flowchart illustrating a method for providing an augmented reality according to still another embodiment.

### DETAILED DESCRIPTION OF THE ILLUSTRATED EMBODIMENTS

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. do not denote a limitation of quantity, but rather denote the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals denote like elements. The shape, size sand regions, and the like, of the drawing may be exaggerated for clarity.

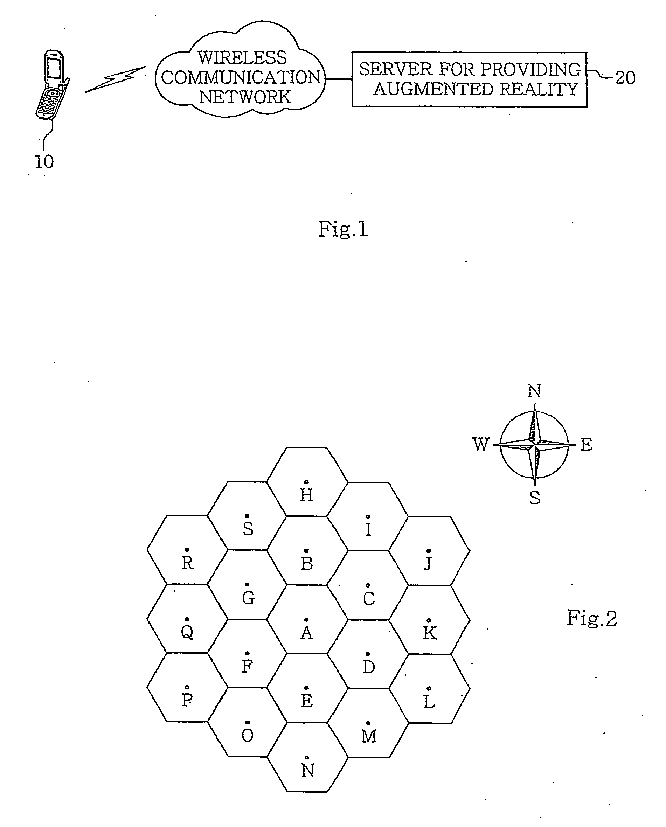

FIG. 1 is a diagram schematically illustrating a configuration of a system for providing an augmented reality according to an exemplary embodiment. The system for providing an augmented reality includes: a server 20 for providing an augmented reality, which manages information data to be provided to a user in the form of a database organized according oto a section; and a terminal 10 for providing an augmented reality, which is connected to the augmented reality providing server according to the execution of the augmented reality mode and transmits its current position information thereto. Herein, the section may be an area in which the terminal 10 is disposed or areas adjacent thereto or other areas.

In more detail, in FIG. 1, if the augmented reality mode is executed, the terminal 10 is connected to the augmented reality providing server 20 via a wireless communication network, and transmits its current position information to the augmented reality providing server 20. The terminal 10 may be an augmented reality providing terminal. The terminal 10 receives information data in a specific direction or information data in all directions for the section where the terminal is currently located from the augmented reality server 20, and displays a result obtained by combining the received information data with a real-time image obtained by a camera of the terminal 10. The real-time image obtained by the camera of the terminal 10 may be described as a real-time video image.

In addition, the terminal 10 extracts information data in a direction in which the terminal faces at a current time on the basis of current direction information from the information data received from the augmented reality providing server 20, and displays a result obtained by combining the extracted information data with the real-time video image obtained by the camera.

If the augmented reality providing server 20 receives the position information of the terminal 10 from the terminal 10, the augmented reality providing server 20 searches all direction information data for the section at which the terminal 10 is currently located on the basis of the received position information, and transmits the search result to the terminal 10.

Meanwhile, as described above, if the terminal 10 is connected to the augmented reality providing server 20 according to the execution of the augmented reality mode, the terminal 10 transmits direction information to the server 20 together with current position information. And, if the terminal 10 receives the information data in a direction in which the terminal 10 faces in the section where the terminal 10 is currently located from the augmented reality providing server 20, the terminal 10 displays a result obtained by combining the received information data with the real-time video image obtained by the camera of the terminal 10.

The augmented reality providing server 20 manages information data to be provided for the user in the form of a database by a unit of a section. If the augmented reality providing server 20 receives the direction information together with the current position information of the terminal 10 from the terminal 10 connected via the wireless communication network, the augmented reality providing server 20 searches information data in a direction in which the terminal 10 faces in the section in which the terminal 10 is currently located on the basis of the received position information and direction information, and transmits the searched information data to the terminal 10.

The information data may include section identification information for identifying to which section the information data relates and direction identification information for identifying to which direction the information data relates. For easy search and extraction of information according to the direction information and the position information of the terminal 10 and the augmented reality providing server 20, the shape of the section in the embodiment may be realized as a circle, a hexagon, an octagon, a dodecagon, an oval, a fan shape, or the like. In addition, the shape of the section may be realized as a three-dimensional shape, such as a sphere, a hexahedron, and an octahedron. The size of the section may be realized as various sizes. The sections may be adjacent to each other while forming a boundary therebetween, or the sections may not be adjacent to each other in a case in which an amount of information is not large. The sections may overlap with each other.

For terminals 10 located at the same section, the same information data is provided for each of the terminals 10.

In an exemplary embodiment, the position information of the terminal 10 may be detected by a global positioning system (GPS) receiver (not shown) of the terminal 10. For example, the position information of the terminal 10 detected by the GPS may be transmitted from the terminal 10 to the augmented reality server 20. Alternatively, in response to a position information transmission request of the terminal 10, the position information of the terminal 10 may be directly transmitted from a separate GPS server (not shown) for managing the GPS position information to the augmented reality server 20.

In an exemplary embodiment, the direction information of the terminal 10 may be detected by an electronic compass of or connected to the terminal 10, and the direction information of the terminal detected by the electronic compass may be transmitted to the augmented reality server 20.

FIG. 2 is a diagram illustrating a shape of a section according to an exemplary embodiment. The augmented reality providing server 20 manages the information data to be provided for the user in the form of a database according to the section. Accordingly, for example, in the case where the terminal 10 faces the north in the section A, the terminal 10 receives the corresponding information data (that is, the information data at a position toward the north in the section A) from the augmented reality providing server 20.

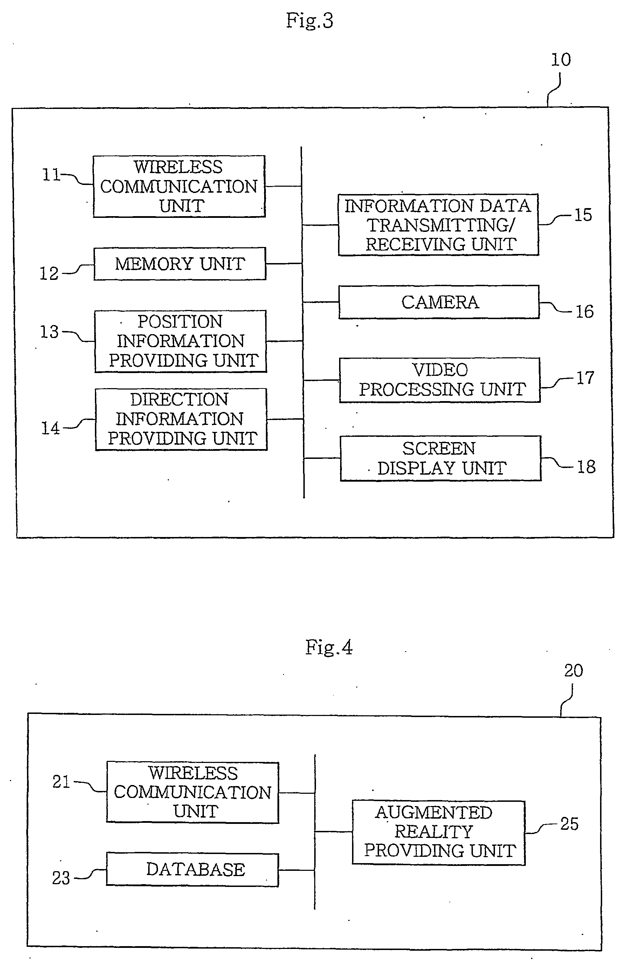

FIG. 3 is a diagram schematically illustrating a configuration of a terminal for providing an augmented reality according to an exemplary embodiment. In FIG. 3, a wireless communication unit 11 is connected to the augmented reality providing server 20 via a wireless communication network under the control of an information data transmitting/receiving unit 15 driven according to the execution of an augmented reality mode.

A memory unit 12 stores the information data received from the augmented reality providing server 20.

A position information providing unit 13 provides the current position information of the terminal 10. As described above, the position information providing unit 13 may be a GPS receiver.

A direction information providing unit 14 provides the direction information in a direction in which the terminal 10 faces at the current time. As described above, the direction information providing unit 14 may be an electronic compass.

If the information data transmitting/receiving unit 15 is driven according to the execution of the augmented reality mode, and is connected to the augmented reality providing server 20 via the wireless communication unit 11, the information data transmitting/receiving unit 15 transmits the current position information of the terminal 10 obtained from the position information providing unit 13 to the augmented reality providing server 20. Subsequently, the information data transmitting/receiving unit 15 may receive all information data in all directions for the section where the terminal 10 is currently located from the augmented reality providing server 20, and transmits the information data to a video processing unit 17.

In addition, the information data transmitting/receiving unit 15 may extract the information data in a direction in which the terminal 10 faces on the basis of the direction information obtained from the direction information providing unit 14 from the information data received from the augmented reality providing server 20, and transmits the extracted information data to the video processing unit 17.

Further, the information data transmitting/receiving unit 15 transmits the current position information and the direction information of the terminal 10 to the augmented reality providing server 20. The information data transmitting/receiving unit 15 may receive the information data in a direction in which the terminal 10 faces in the section where the terminal 10 is currently located from the augmented reality providing server 20, and then transmits the information data to the video processing unit 17.

The information data transmitting/receiving unit 15 may receive the position information and the direction information changing with the movement of the terminal 10 from the position information providing unit 13 and the direction information providing unit 14, transmit the position information and the direction information to the augmented reality providing server 20 in real time, and transmit the new information data received from the augmented reality providing server 20 according to the position information and the direction information to the video processing unit 17.

In addition, the information data transmitting/receiving unit 15 may download the information data on the section in which the terminal 10 is currently located from the augmented reality providing server 20, and may store the information data in a memory unit 12. Then, in the case where the terminal 10 is reconnected to the augmented reality providing server 20 according to a re-execution of the augmented reality mode in the same section, the information data transmitting/receiving unit 15 compares version information of the information data for the corresponding section received from the augmented reality providing server 20 with version information of the information data for the corresponding section stored in the memory unit 12. As a result of the comparison, if the information data of the corresponding section stored in the memory unit 12 is an old version, the information data transmitting/receiving unit 15 downloads updated information data from the augmented reality providing server 20, and stores the updated information data in the memory unit 12. Then, the information data transmitting/receiving unit 15 transmits the new information data downloaded from the augmented reality providing server 20 and the information data read from the memory unit 12 to the video processing unit 17.

On the other hand, if the information data stored in the memory unit 12 is the same as the information data stored in the augmented reality providing server 20, i.e., a current version of the information data, the information data transmitting/receiving unit 15 reads the information data (the information data of the section in which the terminal is currently located) stored in the memory unit 12, and transmits the information data to the video processing unit 17.

The video processing unit 17 combines the information data transmitted from the information data transmitting/receiving unit 15 with the real-time video image obtained by the camera 16, and displays the result on a screen display unit 18.

The camera 16 may be a rotatable camera. If the camera 16 is the rotatable camera, the direction information providing unit 14 acquires in real time the direction information changing with the rotation of the camera 16, and provides the direction information to the information data transmitting/receiving unit 15. In this case, the user may obtain the information data in a desired direction in the corresponding section without directly moving his/her body.

If the information data transmitting/receiving unit 15 receives a request for a position movement to the section D of FIG. 2 from the user who is located at the current section A and wants to see a space in the section D, the information data transmitting/receiving unit 15 receives the identification information on the section D as the position movement target, and transmits the identification information to the augmented reality providing server 20. In addition, the information data transmitting/receiving unit 15 receives the video data and the information data for the section D from the augmented reality providing server 20, and transmits the video data and the information data to the video processing unit 17. Accordingly, the user may obtain the information data of the section D while being located at the section A without directly moving to the section D.

If the information data transmitting/receiving unit 15 receives a space share request from the user located at the current section A of FIG. 2 such that the user wants to share a space with another terminal 10 located at the section E, the information data transmitting/receiving unit 15 transmits the identification information on the other terminal 10 as a space share target to the augmented reality providing server 20, and transmits the video data obtained by the camera to the corresponding terminal 10 by setting a video call with the other terminal 10 located at the section E through the wireless communication unit 11.

The augmented reality providing server 20, which receives the space share request with the other terminal 10 from the information data transmitting/receiving unit 15 of the terminal 10, transmits the information data transmitted to the terminal 10 located at the section A to the other terminal located at the section E. Accordingly, although the terminal 10 located at the section A and the terminal located at the section E are located at different positions, the terminals may share the information data as if they are located in the same section.

If the information data transmitting/receiving unit 15 receives a space share request from the user located at the section A such that the user wants to share a space of the section D with another terminal located at the section E, the information data transmitting/receiving unit 15 transmits the identification information on the other terminal 10 as the spare share target and the identification information on the space share section D to the augmented reality providing server 20, receives the video data and the information data for the section D from the augmented reality providing server 20, and transmits the video data and the information data to the video processing unit 17. Accordingly, the terminal 10 located at the current section A may share the information data of the section D with the other terminal located at the section E.

As described above, the terminal 10 may provide the receiver with the position information for the specific position by using various effects such as an acoustic effect (voice), a visual effect (images such as a cross mark and an arrow mark using a pen or drawing menu), and a touch effect (a vibration or a protrusion) while sharing the space with the other terminal through the augmented reality providing server 20.

The information data transmitting/receiving unit 15 may receive a search target site (for example, a toilet, ** Bakery, ΔΔ Building, and the like) in the current section from the user, and may transmit the search target site to the augmented reality providing server 20. Then, the information data transmitting/receiving unit 15 receives the position information for the user's search target site from the augmented reality providing server 20, and transmits the information to the video processing unit 17.

The information data transmitting/receiving unit 15 may store in real time the information data received from the augmented reality providing serer 20 and the video data obtained by the camera 16 in the memory unit 12 in response to a record request input from the user. The user may retrieve the movement path, the information data for the corresponding section, the video information, and the like by reproducing the information data and the video data stored in the memory unit 12.

The information data transmitting/receiving unit 15 may calculate an angle of the terminal 10, transmit the angle information to the augmented reality providing server 20, and receive the information data corresponding to the angle from the augmented reality providing server 20. For example, in the case where the user located in a building wants to obtain the information data from the basement to the topmost floor of the building, the augmented reality providing server 20 may provide the information data for each of the stories according to the controlled angle by controlling the angle of the terminal 10.

After the information data transmitting/receiving unit 15 receives all information data for the building, the information data transmitting/receiving unit 15 may provide the information data for each of the floors through the screen control.

FIG. 4 is a diagram schematically illustrating a configuration of a server for providing an augmented reality according to an exemplary embodiment. In FIG. 4, the wireless communication unit 21 carries out a communication with the terminal 10 connected according to the execution of the augmented reality mode.

A database 23 stores the information data to be provided to the terminal 10 in the form of a database according to a section.

The information data stored in the database 23 according to a section includes section identification information and direction information, and may further include level information. Accordingly, in the case of providing the information data for a building located at a specific section, the information data for each floor may be provided.

In addition, constellation information, position of the moon, celestial cycles, and the like may be provided. For example, in the case where the user of the camera 10 photographs the sky, the constellation information on the night sky corresponding to the current position of the terminal 10 and the current time may be provided.

If an augmented reality providing unit 25 receives the position information of the terminal 10 connected through the wireless communication unit 21, the augmented reality providing unit 25 searches the information data in all directions for the section where the terminal 10 is currently located in the database 23 on the basis of the received position information, and transmits the searched information data to the terminal 10.

If the augmented reality providing unit 25 receives the position information and the direction information from the terminal 10 connected through the wireless communication unit 21, the augmented reality providing unit 25 searches the information data in a direction in which the terminal 10 faces in the section where the terminal 10 is currently located in the database 23 on the basis of the received position information and direction information, and transmits the searched information data to the terminal 10.

Further, if the augmented reality providing unit 25 receives the position information and the direction information changing in time from the terminal 10, the augmented reality providing unit 25 re-searches the information data in the database 23 on the basis of the received position information and direction information, and transmits the re-searched information data to the terminal 10.

In the state where the terminal 10 is connected to the augmented reality providing server 20 in a specific section, e.g., the section A, according to the execution of the augmented reality mode, and downloads and stores the information data of the section A, if the terminal 10 is reconnected in the section A, the augmented reality providing unit 25 transmits the version information of the information data for the section A to the terminal 10. Subsequently, if there is a download request from the terminal 10 after performing a comparison between the version information of the information data for the section A received from the augmented reality providing server 20 and the version information of the information data for the section A stored in the memory unit, the augmented reality providing unit 25 downloads updated information data for the section A to the terminal 10.

The comparison of the version may be performed in the augmented reality providing server 20 instead of the terminal 10. That is, in the state where the augmented reality providing server 20 stores the version of the information data transmitted to the terminal 10, if the same terminal 10 requests the augmented reality at the same position later, the augmented reality providing server 20 compares the version of the precedent information data with the version of the currently updated information data. If the versions are the same, the information data may not be provided to the terminal.

If the augmented reality providing unit 25 receives a position movement request to, e.g., the section D from the terminal 10 located at, e.g., the section A, the augmented reality providing unit 25 searches the video data and the information data for the section D, and transmits the searched video data and information data for the section D to the terminal 10 located at the section A. The video data for the section D provided by the augmented reality providing unit 25 of the augmented reality providing server 20 may be virtual video data obtained from the virtual image of the space of the section D or actual video data directly obtained by a camera in the section D.

At this time, in the case where a CCTV is installed in the section D and the augmented reality providing server 20 may be linked with the CCTV, the augmented reality providing unit 25 may transmit the video data obtained through the CCTV to the terminal 10 together with the information data of the section D.

If the section D, which is requested for the position movement by the terminal 10, is a shop, it is possible to provide a service for allowing the terminal 10 to perform an order, a purchase, a reservation, and the like by using a menu service provided by the shop.

If, for example, the augmented reality providing unit 25 receives a space share request from a first terminal 10 such that the first terminal 10 located at the section A may share the space with a second terminal 10 located at the section E, the augmented reality providing unit 25 searches the information data of the section A on the basis of the position information and the direction information received from the first terminal 10, and transmits the searched information data of the section A to the second terminal 10 in addition to the first terminal 10. At this time, the first terminal 10, which requests the space share, transmits the video data obtained by the camera to the second terminal 10 by setting a video call with the second terminal 10. Accordingly, the first terminal 10 may share the video data and the information data for the section where the first terminal 10 is located with the second terminal 10 located at a different position.

If, for example, the augmented reality providing unit 25 receives a space share request from the first terminal 10 such that the first terminal 10 located at the section A may share the space for the section D with the second terminal 10 located at the section E, the augmented reality providing unit 25 searches the video data and the information data for the section D, and transmits the searched video data and information data for the section D to both the first terminal 10 located at the section A and the second terminal 10 located at the section E, thereby allowing the first and second terminals 10 located at different positions to share a third space.

If a specific target or site is selected by the terminal 10 which does not use an augmented reality service at the current time, the augmented reality providing unit 25 detects the position information of the selected target or site by using a position tracking technique, and transmits the result to the terminal 10.

If the first terminal 10 requests 'share mode for sharing information of current location with others' to the second terminal 10 via the augmented reality providing server 20, and the second terminal 10 accepts the request, the augmented reality providing unit 25 transmits the information on the section where the second terminal 10 is currently located to the first terminal 10, and allows the first terminal 10 to check the current position information on the second terminal 10.

The augmented reality providing unit 25 may provide information on the number of persons assembled in the sections by counting the number of the terminals 10 connected in the sections.

The augmented reality providing unit 25 may change the range of the section and the amount of information data to be provided to the terminal 10 depending on the movement speed of the user. For example, a smaller amount of information data may be provided if the user is walking than if the user is moving in a vehicle. That is, the amount of information data may be provided in the order of 'stopping < walking < moving in a vehicle'.

If the terminal 10 is located at an overlapping portion of the sections, the augmented reality providing unit 25 may allow the user to select the section of which the information data he/she wants to be provided. Alternatively, the augmented reality providing unit 25 may automatically provide the information data for the section located in a direction in which the terminal 10 faces.

The augmented reality providing unit 25 may search the information data for at least one of sections adjacent to the corresponding section together with the information data for the section where the terminal 10 is currently located, and transmit the information data to the terminal 10. For example, in the case where the terminal 10 is located at the section A of FIG. 2, the augmented reality providing unit 25 may search the information data for the sections B, C, D, E, F, and G, which are adjacent to the section A, in addition to the information data included in the section A, and transmit the information data to the terminal 10.

At this time, the augmented reality providing unit 25 may transmit all information data for the section A where the terminal 10 is located, and transmit only representative information data of the information data for the adjacent sections B, C, D, E, F, and G. Here, the range of the adjacent sections may be variously configured and provided by a service provider depending on purposes.

If the augmented reality providing unit 25 receives the angle information from the terminal 10 in addition to the position information and the direction information, if it is checked that the terminal 10 faces the sky on the basis of the received angle information, the augmented reality providing unit 25 searches and provides the constellation and the like located at a position indicated by the terminal 10.

In addition, if the augmented reality providing unit 25 receives a specific date and time information at the same time, the augmented reality providing unit 25 searches and provides information data on phenomena which may happen at the corresponding date and time (e.g., solar eclipse, lunar eclipse, meteor, and the like) in the corresponding section.

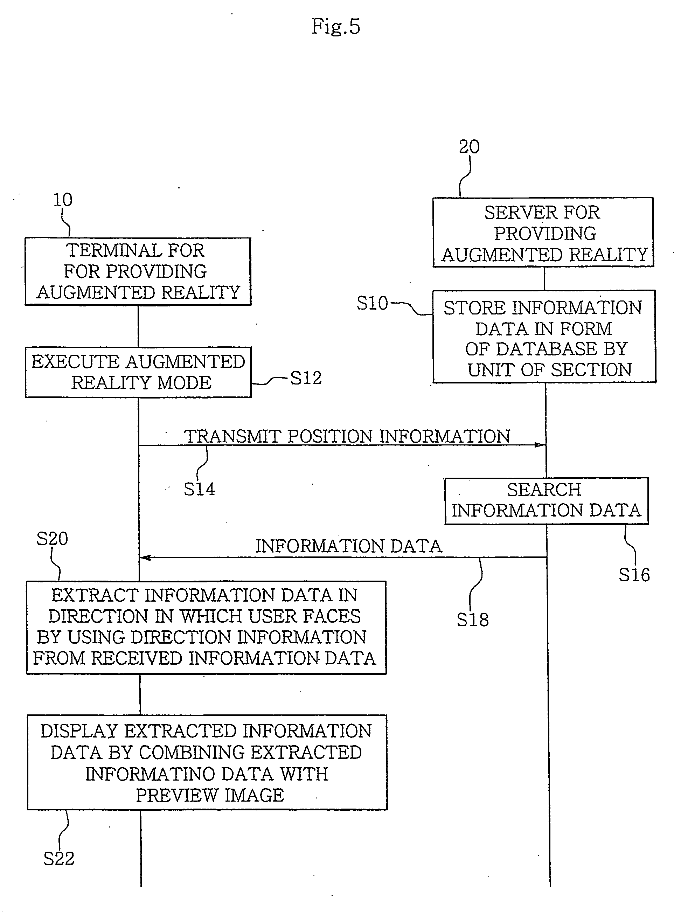

FIG. 5 is a flowchart illustrating a method for providing an augmented reality according to an exemplary embodiment. First, the augmented reality providing server 20 manages the information data to be provided for the user in the form of a database according to a section, and stores it in the database 23 in operation S10.

If the terminal 10 is connected to the augmented reality providing server 20 via the wireless communication network according to the execution of the augmented reality mode in operation S12, and transmits current position information thereto in operation S 14, the augmented reality providing server 20 searches, in operation S 16, all information data in all directions for the section in which the terminal 10 is currently located from the database 23 on the basis of the position information received from the terminal 10, and transmits, in operation S18 the searched information data to the terminal 10.

The terminal 10, which receives the information data from the augmented reality providing server 20 in operation S 18, combines the information data received from the augmented reality providing server 20 with the real-time video image obtained by the camera 16, and displays the result on the screen display unit 18. The terminal 10 extracts the information data in a direction in which the terminal 10 faces at the current time on the basis of its current direction information from the information data received from the augmented reality providing server 20 in operation S20, combines the extracted information data with the real-time video image obtained by the camera 16, and then displays the result on the screen display unit 18 in operation S22.

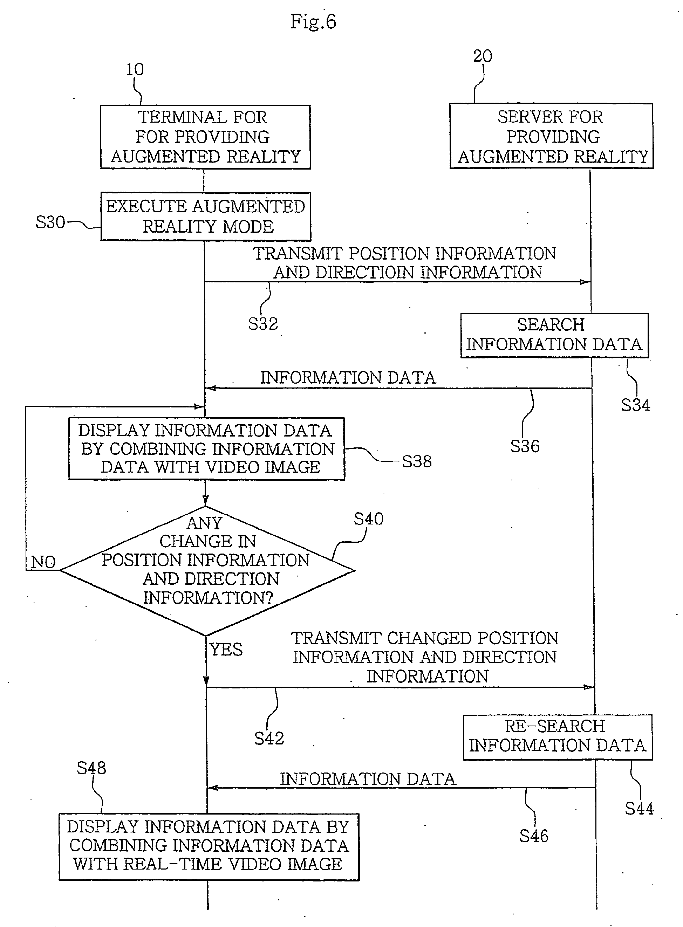

FIG. 6 is a flowchart illustrating a method for providing an augmented reality according to an exemplary embodiment. First, if the terminal 10 is connected to the augmented reality providing server 20 via the wireless communication network according to the execution of the augmented reality mode in operation S30, and transmits its current position information thereto in operation S32, the augmented reality providing server 20 searches information data in a direction in which the terminal 10 faces in the section in which the terminal 10 is currently located from the database 23 on the basis of the position information and the direction information received from the terminal 10 in operation S34, and transmits the searched information data to the terminal 10 in operation S36.

The terminal 10, which receives the information data from the augmented reality providing server 20 in operation S36, combines the information data received from the augmented reality providing server 20 with the real-time video image obtained by the camera 16, and displays the result on the screen display unit 18 in operation S38.

As described above, if the position information and the direction information of the terminal 10 are changed due to the movement of the user as determined in operation S40, the terminal 10transmits in real time the changed position information and direction information to the augmented reality providing server 20 in operation S42.

The augmented reality providing server 20, which receives the changed position information and direction information transmitted in real time from the terminal 10, re-searches the information data on the basis of the changed position information and direction information received from the terminal 10 in operation S44, and transmits the re-searched information data to the terminal 10 in operation S46.

The terminal 10, which receives the information data from the augmented reality providing server 20 in operation S46, displays the information data received from the augmented reality providing server 20 on the screen display unit 18 by combining the information data with the real-time video screen obtained by the camera 16 in operation S48.

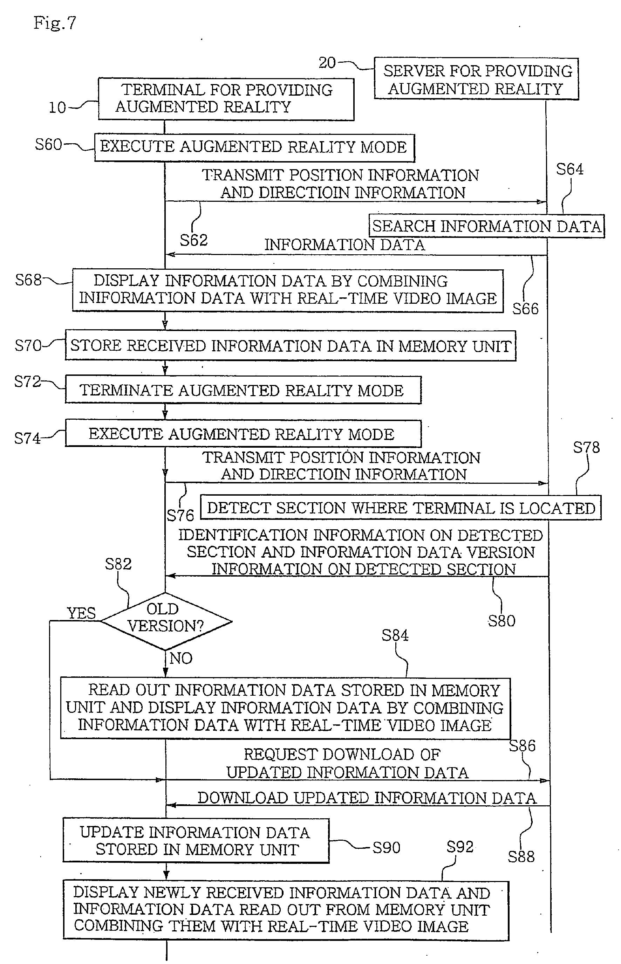

FIG. 7 is a flowchart illustrating a method for providing an augmented reality according to an exemplary embodiment. First, if the terminal 10 is connected to the augmented reality providing server 20 via the wireless communication network according to the execution of the augmented reality mode in operation S60, and transmits its current position information thereto in operation S62, the augmented reality providing server 20 searches information data in a direction in which the terminal 10 faces in the section in which the terminal 10 is currently located on the basis of the position information and the direction information received from the terminal 10 in operation S64, and transmits the searched information data to the terminal 10 in operation S66.

The terminal 10, which receives the information data from the augmented reality providing server 20 in operation S66, combines the information data received from the augmented reality providing server 20 with the real-time video image obtained by the camera 16, and displays the result on the screen display unit 18 in operation S68.

The terminal 10 stores the information data received from the augmented reality providing server 20 in operation S66 in the memory unit 12 in operation S70.

Subsequently, if the augmented reality mode ends in operation S72, and the augmented reality mode is executed again in operation S74, the terminal 10 is connected to the augmented reality providing server 20 via the wireless communication network, and transmits current position and direction information thereto in operation S76.

The augmented reality providing server 20, which receives the position information and the direction information from the terminal 10 in S76, detects the section in which the terminal 10 is currently located on the basis of the position information in operation S78, and transmits information data version information for the corresponding section to the terminal 10 together with the identification information of the corresponding section in operation S80.

The terminal 10, which receives the information data version information on the corresponding section and the identification information on the current section from the augmented reality providing server 20 in operation S80, compares the information data version information on the current section with the information data version information on the current section stored in the memory unit 12 in operation S70. In the case where the information data of the corresponding section stored in the memory unit 12 is not an old version as determined in operation S82, the terminal 10 reads out the information data of the current section stored in the memory unit 12, and displays the information data on the screen display unit 18 by combining the information data with the real-time video image obtained by the camera 16 in operation S84.

Otherwise, in the case where the information data of the corresponding section stored in the memory unit 12 is an old version as determined in operation S82, the terminal 10 requests a download of the updated information data to the augmented reality providing server 20 in operation S86, and downloads the updated information data in operation 588.

Subsequently, the terminal 10 updates the information data of the corresponding section stored in the memory unit 12 as the information data downloaded from the augmented reality providing server 20 in operation S90, and displays a result, which is obtained by combining the new information data downloaded from the augmented reality providing server 20 and the information data read from the memory unit 12 with the real-time video image obtained by the camera 16, on the screen display unit 18 in operation S92.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A system, a terminal, a server, and a method for providing an augmented reality are capable of providing environment information data in a direction viewed by a user from a current position. The server for providing an augmented reality manages information data to be provided to the terminal in a database according to a section. If the server receives current position information and direction information of the terminal from the terminal connected according to an execution of an augmented reality mode, the server searches information data in a direction in which the terminal faces in a section in which the terminal is currently located from the database, and transmits the searched information data to the terminal.

## Claims

1. A system adapted to provide an augmented reality, the system comprising:
a server adapted to manage information data in a database according to a section, and a terminal
wherein the server is adapted to receive direction information and position information from a terminal,
the server is adapted to search information data for a section in which the terminal is located according to the position information of the terminal, to search information data for a direction in which the terminal faces in the section in which the terminal is located according to the position information and the direction information of the terminal received from the terminal, and to provide the searched information data to the terminal.

2. The system of claim 1, wherein the information data includes section identification information to identify to which section the information data relates and direction identification information to identify to which direction the information data relates.

3. The system of claim 1 or 2, wherein the terminal is adapted to extract information data for a direction in which the terminal faces from the information data received from the server according to direction information of the terminal, and to display the extracted information data.

4. A terminal adapted to provide an augmented reality, the terminal comprising:
a position information providing unit adapted to provide position information of the terminal;
an information data transmitting/receiving unit adapted to transmit the position information, and adapted to receive information data for a section in which the terminal is located;
a camera adapted to obtain a real-time image; and
a video processing unit adapted to combine the information data received by the information data transmitting/receiving unit with the real-time image obtained by the camera, and adapted to display a result on a screen display unit; and
a direction information providing unit adapted to provide direction information of the terminal,
wherein the information data transmitting/receiving unit is adapted to transmit position information and direction information of the terminal according to an execution of an augmented reality mode, and receive information data for a direction in which the terminal faces in a section in which the terminal is located.

5. The terminal of claim 4,
wherein the information data transmitting/receiving unit is adapted to carry out at least one of the following operations:
- extract, from the received information data, information data for a direction in which the terminal faces according to the direction information transmitted from the direction information providing unit, and to transmit the extracted information data to the video processing unit, and
- transmit in real time the position information and the direction information, which change according to a movement of the terminal.

6. The terminal of claim 4 or 5, further comprising:
a memory unit adapted to download and to store information data of the section,
wherein, if there is updated information data from among the information data of the section, the information data transmitting/receiving unit is adapted to download the updated information data, and to update the information data in the memory unit.

7. The terminal of any of claim 4 to 6, wherein the terminal is adapted to request a position movement from a first section to a second section, the information data transmitting/receiving unit is adapted to receive identification information on the second section as a position movement target, to transmit the identification information, to receive video data and information data for the second section, and to transmit the video data and the information data to the video processing unit.

8. The terminal of any of claims 4 to 7, wherein the terminal is adapted to request a space share from a first section to share a space with another terminal located at a second section and the information data transmitting/receiving unit is adapted to transmit identification information on the other terminal as a space share target, and to transmit video data obtained by the camera of the terminal to the other terminal by setting a video call with the other terminal through the wireless communication unit.

9. The terminal of any of claims 4 to 8, wherein the terminal is adapted to request a search site in a section, and the information data transmitting/receiving unit is adapted to transmit the search site, to receive position information for the search site, and to transmit the position information to the video processing unit.

10. The terminal of any of claims 4 to 9, wherein the information data transmitting/receiving unit is adapted to store video data obtained by the camera and information data received from the server in real time in the memory unit.

11. A server adapted to provide an augmented reality, the server comprising:
a database adapted to manage and to store information data according to a section; and
an augmented reality providing unit adapted to search the information data for a section in which a terminal is located on the basis of position information received from the terminal, and to transmit the searched information data to the terminal,
wherein the augmented reality providing unit is adapted to receive position information and direction information from the terminal and the augmented reality providing unit is adapted to search the information data for a direction in which the terminal faces in a section in which the terminal is located, and transmit the searched information data to the terminal.

12. The server of claim 11, wherein the augmented reality providing unit is adapted to research the information data according to changing position information and direction information received in real time from the terminal, and is adapted to provide the researched information data to the terminal.

13. The server of any of claims 11 or 12,
wherein, if the terminal connected in a first section is re-connected in the first section, the augmented reality providing unit is adapted to transmit information data version information on the first section to the terminal, and
wherein, if there is a download request for updated information data from the terminal, the augmented reality providing unit is adapted to download the updated information data to the terminal.

14. The server of any of claims 11 to 13, wherein the terminal is adapted to request a position movement from a first section to a second section and the augmented reality providing unit is adapted to search video data and information data for the second section, and to transmit the video data and the information data to the terminal, and
wherein, preferably, a closed circuit television (CCTV) system is installed in the second section, and the augmented reality providing unit is adapted to transmit video data from the CCTV system to the terminal together with the information data of the second section

15. The server of any of claims 11 to 14, wherein, if a first terminal is adapted to request a space share from a first section to share a space with a second terminal located at a second section, the augmented reality providing unit is adapted to transmit information data searched on the basis of the position information and the direction information received from the first terminal to both the first terminal and the second terminal.

16. The server of any of claims 11 to 15, wherein, if a first terminal located at a first section is adapted to request a space share to share a space for a third section with a second terminal located at a second section, the augmented reality providing unit is adapted to search video data and information data for the third section, and to transmit the video data and the information data to both the first terminal and the second terminal.

17. The server of any of claims 11 to 16, wherein the augmented reality providing unit is adapted to search information data of a section in which the terminal is located and information data of at least one of sections adjacent to the section in which the terminal is located, and to transmit the searched information data to the terminal, and
wherein, preferably, the augmented reality providing unit is adapted to transmit the information data of the section in which the terminal is located to the terminal together with the information data of the adjacent sections, and the augmented reality providing unit is adapted to transmit representative information data from among the information data of the adjacent sections.

18. A method for providing an augmented reality, the method comprising:
storing information data in a database in a server according to a section;
the server being connected to a terminal according to an execution of an augmented reality mode of the terminal;
receiving from the terminal direction information and position information of the terminal;
searching information data for a section in which the terminal is located according to the position information; and
searching the information data in a direction in which the terminal faces in the section in which the terminal is located according to the position information and the direction information;
transmitting the information data to the terminal.

19. The method of claim 18, further comprising at the terminal
extracting, from the information data received from the server, information data in a direction in which the terminal faces by using direction information; and
displaying the extracted information data by combining the extracted information data with a real-time image obtained by a camera.

20. The method of any of claims 18 or 19, further comprising:
the server receiving from the terminal in real time, the position information and direction information, which change with a movement of the terminal, and
re-searching the information data according to the changing position information and direction information and transmitting the information data to the terminal.

21. The method of any of claims 18 to 20, further comprising:
storing the information data received from the server in a memory unit of the terminal;
transmitting, from the server, information data version information for the section to the terminal if the terminal is reconnected to the server and located in the same section;
downloading, in the terminal, updated information data from the server if the terminal determines that a version of the information data for the section stored in the memory unit is an old version; and
storing the updated information data downloaded from the server in the memory unit of the terminal.

## Patentansprüche

1. System, das zum Bereitstellen einer erweiterten Realität ausgelegt ist, wobei das System umfasst:
einen Server, der dazu ausgelegt ist, Informationsdaten in einer Datenbank gemäß einem Abschnitt zu managen, und ein Endgerät,
worin der Server dazu ausgelegt ist, Richtungsinformation und Positionsinformation von einem Endgerät zu empfangen,
wobei der Server dazu ausgelegt ist, Informationsdaten für einen Abschnitt, in dem das Endgerät angeordnet ist, gemäß der Positionsinformation des Endgeräts zu suchen, Informationsdaten für eine Richtung,
in die das Endgerät weist, in dem Abschnitt, in dem das Endgerät angeordnet ist, gemäß der von dem Endgerät empfangenen Positionsinformation und der Richtungsinformation des Endgeräts zu suchen, und die gesuchten Informationsdaten dem Endgerät zu liefern.

2. Das System von Anspruch 1, worin die Informationsdaten Abschnittsidentifikationsinformation enthält, um zu identifizieren, zu welchem Abschnitt die Informationsdaten gehören, sowie Richtungsidentifikationsinformation, um zu identifizieren, zu welcher Richtung die Indentifikationsdaten gehören.

3. Das System von Anspruch 1 oder 2, worin das Endgerät dazu ausgelegt ist, Informationsdaten für eine Richtung, in der das Endgerät weist, aus den von dem Server empfangenen Informationsdaten gemäß Richtungsinformation des Endgeräts zu extrahieren, und um die extrahierten Informationsdaten anzuzeigen.

4. Endgerät, das zum Bereitstellen einer erweiterten Realität ausgelegt ist, wobei das Endgerät umfasst:
eine Positionsinformationsbereitstellungseinheit, die dazu ausgelegt ist, Positionsinformation des Endgeräts bereitzustellen;
eine Informationsdaten-Sende-/Empfangseinheit, die dazu ausgelegt ist, die Positionsinformation zu senden, und dazu ausgelegt ist, Informationsdaten für einen Abschnitt zu empfangen, in dem das Endgerät angeordnet ist;
eine Kamera, die dazu ausgelegt ist, ein Echtzeitbild zu erhalten; und
eine Videoverarbeitungseinheit, die dazu ausgelegt ist, die von der Informationsdaten-Sende-/Empfangseinheit empfangenen Informationsdaten mit dem von der Kamera erhaltenen Echtzeitbild zu kombinieren, und dazu ausgelegt ist, ein Ergebnis auf einer Bildschirmanzeigeeinheit anzuzeigen; und
eine Richtungsinformationsbereitstellungseinheit, die dazu ausgelegt ist, Richtungsinformation des Endgeräts bereitzustellen,
worin die Informationsdaten-Sende-/Empfangseinheit dazu ausgelegt ist, Positionsinformation und Richtungsinformation des Endgeräts gemäß einer Ausführung eines Realtitätserweiterungsmodus zu senden, und Informationsdaten für eine Richtung zu empfangen, in der das Endgerät in einem Abschnitt weist, in dem das Endgerät angeordnet ist.

5. Das Endgerät von Anspruch 4,
worin die Informationsdaten-Sende-/empfangseinheit dazu ausgelegt ist, zumindest eine der folgenden Operationen auszuführen:
Extrahieren, aus den empfangenen Informationsdaten, von Informationsdaten für eine Richtung, in der das Endgerät weist, gemäß der von der Richtungsinformationsbereitstellungseinheit gesendeten Richtungsinformation, und Senden der extrahierten Informationsdaten zu der Videoverarbeitungseinheit, und
Senden, in Echtzeit, der Positionsinformation und der Richtungsinformation, die sich gemäß einer Bewegung des Endgeräts ändern.

6. Das Endgerät von Anspruch 4 oder 5, ferner umfassend:
eine Speichereinheit, die dazu ausgelegt ist, Informationsdaten des Abschnitts herunterzuladen und zu speichern,
worin, wenn aktualisierte Informationsdaten unter den Informationsdaten des Abschnitts vorhanden sind, die Informationsdatensende-/empfangseinheit dazu ausgelegt ist, die aktualisierten Informationsdaten herunterzuladen und die Informationsdaten in der Speichereinheit zu aktualisieren.

7. Das Endgerät von einem der Ansprüche 4 bis 6, worin das Endgerät dazu ausgelegt ist, eine Positionsbewegung von einem ersten Abschnitt zu einem zweiten Abschnitt anzufordern, wobei die Informationsdaten-Sende-/Empfangseinheit dazu ausgelegt ist, Identifikationsinformation an dem zweiten Abschnitt als Positionsbewegungsziel zu empfangen, die Identifikationsinformation zu senden, Videodaten und Informationsdaten für den zweiten Abschnitt zu empfangen und die Videodaten und die Informationsdaten zu der Videoverarbeitungseinheit zu senden.

8. Das Endgerät von einem der Ansprüche 4 bis 7, worin das Endgerät dazu ausgelegt ist, einen räumlichen Anteil von einem ersten Abschnitt anzufordern, um einen Raum mit einem anderen Endgerät zu teilen, das an einem zweiten Abschnitt angeordnet ist, und die Informationsdaten-Sende-/Empfangseinheit dazu ausgelegt ist, Identifikationsinformation über das andere Endgerät als Raumanteilziel zu senden, und um mit der Kamera des Endgeräts erhaltene Videodaten zu dem anderen Endgerät zu senden, durch Setzen eines Videoanrufs mit dem anderen Endgerät durch eine drahtlose Kommunikationseinheit.

9. Das Endgerät von einem der Ansprüche 4 bis 8, worin das Endgerät dazu ausgelegt ist, einen Suchort in einem Abschnitt anzufordern, und die Informationsdaten-Sende-/Empfangseinheit dazu ausgelegt ist, den Suchort zu senden, Positionsinformation für den Suchort zu empfangen und die Positionsinformation zu der Videoverarbeitungseinheit zu senden.

10. Das Endgerät von einem der Ansprüche 4 bis 9, worin die Informationsdaten-Sende-/Empfangseinheit dazu ausgelegt ist, Videodaten, die von der Kamera erhalten werden, und Informationsdaten, die von dem Server empfangen werden, in Echtzeit in der Speichereinheit zu speichern.

11. Server, der dazu ausgelegt ist, eine erweiterte Realität bereitzustellen, wobei der Server umfasst:
eine Datenbank, die dazu ausgelegt ist, Informationsdaten gemäß einem Abschnitt zu managen und zu speichern; und
eine Erweiterte-Realität-Bereitstellungseinheit, die dazu ausgelegt ist, die Informationsdaten für einen Abschnitt, in dem ein Endgerät angeordnet ist, auf der Basis von dem Endgerät empfangenen Positionsinformation zu suchen, und die gesuchten Informationsdaten zu dem Endgerät zu senden,
worin die Erweiterte-Realität-Bereitstellungseinheit dazu ausgelegt ist, Positionsinformation und Richtungsinformation von dem Endgerät zu empfangen und die Erweiterte-Realität-Bereitstellungseinheit dazu ausgelegt ist, die Informationsdaten für eine Richtung, in die das Endgerät weist, in einem Abschnitt, in dem das Endgerät angeordnet ist zu suchen, und die gesuchten Informationsdaten zu dem Endgerät zu senden.

12. Der Server von Anspruch 11, worin die Erweiterte-Realität-Bereitstellungseinheit dazu ausgelegt ist, die Informationsdaten gemäß sich ändernder der Positionsinformation und Richtungsinformation, die in Echtzeit von dem Endgerät empfangen wird, nachzusuchen, und dazu ausgelegt ist, die nachgesuchten Informationsdaten dem Endgerät zu liefern.

13. Der Server von einem der Ansprüche 11 oder 12,
worin, wenn das in einem ersten Abschnitt angeschlossene Endgerät in dem ersten Abschnitt wieder angeschlossen wird, die Erweiterte-Realität-Bereitstellungseinheit dazu ausgelegt ist, Informationsdaten-Versionsinformation über den ersten Abschnitt zu dem Endgerät zu senden, und
worin, wenn eine Herunterladeanforderung für aktualisierte Informationsdaten von dem Endgerät vorhanden sind, die Erweiterte-Realität-Bereitstellungseinheit dazu ausgelegt ist, die aktualisierten Informationsdaten zu dem Endgerät herunterzuladen.

14. Der Server von einem der Ansprüche 11 bis 13, worin das Endgerät dazu ausgelegt ist, eine Positionsbewegung von einem ersten Abschnitt zu einem zweiten Abschnitt anzufordern, und die Erweiterte-Realität-Bereitstellungseinheit dazu ausgelegt ist, Videodaten und Informationsdaten für den zweiten Abschnitt zu suchen, und die Videodaten und die Informationsdaten zu dem Endgerät zu senden, und
worin bevorzugt ein geschlossen-schleifiges Televisions(CCTV)-System in dem zweiten Abschnitt installiert ist und die Erweiterte-Realität-Bereitstellungseinheit dazu ausgelegt ist, Videodaten von dem CCTV-System zu dem Endgerät zusammen mit den Informationsdaten des zweiten Abschnitts zu senden.

15. Der Server von einem der Ansprüche 11 bis 14, worin, wenn ein erstes Endgerät dazu ausgelegt ist, einen räumlichen Anteil von einem ersten Abschnitt anzufordern, um einen Raum mit einem zweiten Endgerät zu teilen, das an einem zweiten Abschnitt angeordnet ist, die Erweiterte-Realität-Bereitstellungseinheit dazu ausgelegt ist, Informationsdaten, die auf der Basis der vom ersten Endgerät empfangenen Positionsinformation und Richtungsinformation gesucht werden, zu sowohl dem ersten Endgerät als auch dem zweiten Endgerät zu senden.

16. Der Server von einem der Ansprüche 11 bis 15, worin, wenn ein erstes Endgerät, das an einem ersten Abschnitt angeordnet ist, dazu ausgelegt ist, einen räumlichen Anteil anzufordern, um einen Raum für einen dritten Abschnitt mit einem zweiten Endgerät zu teilen, das an einem zweiten Abschnitt angeordnet ist, die Erweiterte-Realität-Bereitstellungseinheit dazu ausgelegt ist, Videodaten und Informationsdaten für den dritten Abschnitt zu suchen und die Videodaten und die Informationsdaten zu sowohl dem ersten Endgerät als auch dem zweiten Endgerät zu senden.

17. Der Server von einem der Ansprüche 11 bis 16, worin die Erweiterte-Realität-Bereitstellungseinheit dazu ausgelegt ist, Informationsdaten eines Abschnitts, in dem das Endgerät angeordnet ist, sowie Informationsdaten von zumindest einem von Abschnitten benachbart dem Abschnitt, in dem das Endgerät angeordnet ist, zu suchen, und die gesuchten Informationsdaten zu dem Endgerät zu senden, und
worin bevorzugt die Erweiterte-Realität-Bereitstellungseinheit dazu ausgelegt ist, die Informationsdaten des Abschnitts, in dem das Endgerät angeordnet ist, zu dem Endgerät zusammen mit den Informationsdaten der benachbarten Abschnitte zu senden, und die Erweiterte-Realität-Bereitstellungseinheit dazu ausgelegt ist, repräsentative Informationsdaten unter den Informationsdaten der benachbarten Abschnitte zu senden.

18. Verfahren zum Bereitstellen einer erweiterten Realität, wobei das Verfahren umfasst:
Speichern von Informationsdaten in einer Datenbank in einem Server gemäß einem Abschnitt;
wobei der Server mit einem Endgerät gemäß einer Ausführung eines erweiterten Realitätsmodus des Endgeräts verbunden wird;
Empfangen von Richtungsinformation und Positionsinformation des Terminals des Endgeräts von dem Endgerät;
Suchen von Informationsdaten für einen Abschnitt, in dem das Endgerät angeordnet ist, gemäß der Positionsinformation; und
Suchen der Informationsdaten in einer Richtung, in der das Endgerät weist, in dem Abschnitt, in dem das Endgerät angeordnet ist, gemäß der Positionsinformation und der Richtungsinformation;
Senden der Informationsdaten zu dem Endgerät.

19. Das Verfahren von Anspruch 18, das ferner an dem Endgerät umfasst:
Extrahieren, aus den vom Server empfangenen Informationsdaten, von Informationsdaten in einer Richtung, in der das Endgerät weist, unter Verwendung von Richtungsinformation; und
Anzeigen der extrahierten Informationsdaten durch Kombinieren der extrahierten Informationsdaten mit einem von einer Kamera erhaltenen Echtzeitbild.

20. Das Verfahren von einem der Ansprüche 18 oder 19, das ferner umfasst:
der Server empfängt von dem Endgerät in Echtzeit die Positionsinformation und Richtungsinformation, die sich mit einer Bewegung des Endgeräts ändern, und
Nachsuchen der Informationsdaten gemäß der sich ändernden Positionsinformation und Richtungsinformation, und Senden der Information zu dem Endgerät.

21. Das Verfahren von einem der Ansprüche 18 bis 20, das ferner umfasst:
Speichern der von dem Server empfangenen Informationsdaten in einer Speichereinheit des Endgeräts;
Senden, von dem Server, von Informationsdaten-Versionsinformation für den Abschnitts zu dem Endgerät, wenn das Endgerät mit dem Server wieder verbunden und im gleichen Abschnitt angeordnet wird;
Herunterladen, von dem Endgerät, von aktualisierten Informationsdaten von dem Server, wenn das Endgerät bestimmt, dass eine Version der Informationsdaten für den einer Speichereinheit gespeicherten Abschnitt eine alte Version ist; und
Speichern der von dem Server heruntergeladenen aktualisierten Informationsdaten in der Speichereinheit des Endgeräts.

## Revendications

1. Système conçu pour procurer une réalité augmentée, le système comprenant:
un serveur conçu pour gérer des données d'information dans une base de données suivant une section et un terminal,
dans lequel le serveur est conçu pour recevoir une information de direction et une information de position d'un terminal,
le serveur est conçu pour chercher des données d'information pour une section dans laquelle le terminal est situé selon l'information de position du terminal, pour chercher des données d'information pour une direction à laquelle le terminal fait face dans la section dans laquelle le terminal est situé selon l'information de position du terminal et l'information de direction du terminal reçues du terminal et pour procurer les données d'information recherchées au terminal.

2. Système suivant la revendication 1, dans lequel les données d'information incluent une information d'identification de la section afin d'identifier à quelle section se rapportent les données d'information et une information d'identification de la direction afin d'identifier à quelle direction se rapportent les données d'information.

3. Système suivant la revendication 1 ou 2, dans lequel le terminal est conçu pour extraire des données d'information pour une direction à laquelle le terminal fait face à partir des données d'information reçues du serveur suivant l'information de direction du terminal et pour afficher les données d'information extraites.

4. Terminal conçu pour procurer une réalité augmentée, le terminal comprenant:
une unité procurant une information de position conçue pour procurer une information de position du terminal;
une unité transmettant/recevant des données d'information conçue pour transmettre l'information de position et conçue pour recevoir des données d'information pour une section dans laquelle est situé le terminal,
une caméra conçue pour obtenir une image en temps réel; et
une unité de traitement de l'image vidéo conçue pour combiner les données d'information reçues de l'unité transmettant/recevant des données d'information avec l'image en temps réel obtenue par la caméra, et conçue pour afficher un résultat sur une unité d'écran d'affichage; et
une unité procurant une information de direction conçue pour procurer une information de direction du terminal,
dans lequel l'unité transmettant/recevant des données d'information est conçue pour transmettre une information de position et une information de direction du terminal suivant une exécution d'un mode de réalité augmentée et recevoir des données d'information pour une direction à laquelle le terminal fait face dans une section dans laquelle le terminal est situé.

5. Terminal suivant la revendication 4,
dans lequel l'unité transmettant/recevant des données d'information est conçue pour effectuer au moins une des opérations suivantes:
extraire des données d'information reçues des données d'information pour une direction à laquelle le terminal fait face selon l'information de direction transmise par l'unité procurant une information de direction et pour transmettre les données d'information extraites à l'unité de traitement de l'image vidéo, et
transmettre en temps réel l'information de position et l'information de direction, qui changent suivant un mouvement du terminal.

6. Terminal suivant la revendication 4 ou 5, comprenant en outre:
une unité de mémoire conçue pour télécharger et stocker des données d'information de la section, dans laquelle, s'il y a des données d'information mises à jour parmi les données d'information de la section, l'unité transmettant/recevant des données d'information est conçue pour télécharger les données d'information mises à jour et pour mettre à jour les données d'information dans l'unité de mémoire.

7. Terminal suivant l'une des revendications 4 à 6, dans lequel le terminal est conçu pour demander un mouvement de position d'une première section à une deuxième section, l'unité transmettant/recevant des données d'information étant conçue pour recevoir une information d'identification sur la deuxième section comme cible de mouvement de position, transmettre les informations d'identification, recevoir les données vidéo et les données d'information pour la deuxième section et transmettre les données vidéo et les données d'information à l'unité de traitement de l'image vidéo.

8. Terminal suivant l'une des revendications 4 à 7, dans lequel le terminal est conçu pour demander un partage d'espace à une première section afin de partager un espace avec un autre terminal situé à une deuxième section et l'unité transmettant/recevant des données d'information est conçue pour transmettre l'information d'identification à l'autre terminal comme cible de partage d'espace et pour transmettre les données vidéo obtenues par la caméra du terminal à l'autre terminal en établissant un appel vidéo avec l'autre terminal via l'unité de communication sans fil.

9. Terminal suivant l'une des revendications 4 à 8, dans lequel le terminal est conçu pour demander un site de recherche dans une section et l'unité transmettant/recevant des données d'information est conçue pour transmettre le site de recherche, pour recevoir une information de position pour le site de recherche et pour transmettre l'information de position à l'unité de traitement de l'image vidéo.

10. Terminal suivant l'une des revendications 4 à 9, dans lequel l'unité transmettant/recevant des données d'information est conçue pour stocker des données vidéo obtenues par la caméra et des données d'information reçues du serveur en temps réel dans l'unité de mémoire.

11. Serveur conçu pour procurer une réalité augmentée, le serveur comprenant:
une base de données conçue pour gérer et stocker des données d'information suivant une section; et
une unité procurant une réalité augmentée conçue pour rechercher des données d'information d'une section dans laquelle un terminal est situé sur base de l'information de position reçue du terminal et pour transmettre les données d'information recherchées au terminal,
dans lequel l'unité procurant la réalité augmentée est conçue pour recevoir une information de position et une information de direction du terminal l'unité procurant la réalité augmentée est conçue pour rechercher des données d'information pour une direction à laquelle le terminal fait face dans une section dans laquelle le terminal est situé et pour transmettre les données d'information recherchées au terminal.

12. Serveur suivant la revendication 11, dans lequel l'unité procurant la réalité augmentée est conçue pour rechercher les données d'information suivant une information de changement de position et une information de direction reçues en temps réel du terminal, et est conçue pour procurer les données d'information recherchées au terminal.

13. Serveur suivant l'une des revendications 11 ou 12, dans lequel, si le terminal connecté dans une première section est reconnecté dans la première section, l'unité procurant la réalité augmentée est conçue pour transmettre une information de version des données d'information de la première section au terminal, et
dans lequel, s'il y a une demande de téléchargement pour des données d'information mises à jour du terminal, l'unité procurant la réalité augmentée est conçue pour télécharger les données d'information mises à jour vers le terminal.

14. Serveur suivant l'une des revendications 11 à 13, dans lequel le terminal est conçu pour demander un mouvement de position d'une première section à une deuxième section et l'unité procurant la réalité augmentée est conçue pour rechercher des données vidéo et des données d'information pour la deuxième section et pour transmettre les données vidéo et les données d'information au terminal, et
dans lequel, de préférence, un système de télévision en circuit fermé (CCTV) est installé dans la deuxième section, et l'unité procurant la réalité augmentée est conçue pour transmettre des données vidéo du système CCTV au terminal en même temps que les données d'information de la deuxième section

15. Serveur suivant l'une quelconque des revendications 11 à 14, dans lequel, si un premier terminal est conçu pour demander une partage d'espace d'une première section afin de partager un espace avec un deuxième terminal situé à une deuxième section, l'unité procurant la réalité augmentée est conçue pour transmettre les données d'information recherchées sur base de l'information de position et de l'information de direction reçues du premier terminal à la fois au premier terminal et au deuxième terminal.

16. Serveur suivant l'une quelconque des revendications 11 à 15, dans lequel, si un premier terminal situé à une première section est conçu pour demander une partage d'espace afin de partager un espace pour une troisième section avec un deuxième terminal situé à une deuxième section, l'unité procurant la réalité augmentée est conçue pour rechercher des données vidéo et des données d'information pour la troisième section et transmettre les données vidéo et les données d'information à la fois au premier terminal et au deuxième terminal.

17. Serveur suivant l'une quelconque des revendications 11 à 16, dans lequel l'unité procurant la réalité augmentée est conçue pour rechercher des données d'information d'une section dans laquelle le terminal est situé et des données d'information d'au moins une des sections adjacentes à la section dans laquelle le terminal est situé et pour transmettre les données d'information recherchées au terminal, et
dans lequel, de préférence, l'unité procurant la réalité augmentée est conçue pour transmettre les données d'information de la section dans laquelle le terminal est situé au terminal en même temps que les données d'information des sections adjacentes, et l'unité procurant la réalité augmentée est conçue pour transmettre des données d'information représentatives provenant des données d'information des sections adjacentes.

18. Procédé pour procurer une réalité augmentée, le procédé comprenant:
le stockage de données d'information dans une base de données dans un serveur suivant une section;
le serveur étant connecté à un terminal suivant une exécution d'un mode de réalité augmentée du terminal;
recevoir du terminal une information de direction et une information de position du terminal;
rechercher des données d'information pour une section dans laquelle le terminal est situé suivant l'information de position; et
rechercher des données d'information dans une direction à laquelle le terminal fait face dans la section dans laquelle le terminal est situé suivant l'information de position et l'information de direction;
transmettre les données d'information au terminal.

19. Procédé suivant la revendication 18, comprenant en outre au terminal:
extraire des données d'information reçues du serveur des données d'information dans une direction à laquelle le terminal fait face en utilisant une information de direction; et
afficher les données d'information extraites en combinant les données d'information extraites avec une image en temps réel obtenue par une caméra.

20. Procédé suivant l'une des revendications 18 ou 19, comprenant en outre:
pour le serveur, recevoir du terminal en temps réel l'information de position et l'information de direction, qui changent suivant un mouvement du terminal, et
rechercher les données d'information suivant l'information de changement de position et l'information de direction et transmettre les données d'information au terminal.

21. Procédé suivant l'une quelconque des revendications 18 à 20, comprenant en outre:
stocker les données d'information reçues du serveur dans une unité à mémoire du terminal;
transmettre, depuis le serveur, une information de version des données d'information pour la section au terminal si le terminal est reconnecté au serveur et situé dans la même section;
télécharger, dans le terminal, des données d'information mises à jour du serveur si le terminal détermine qu'une version des données d'information pour la section stockées dans l'unité à mémoire est une version obsolète; et
stocker les données d'information mises à jour téléchargées du serveur dans l'unité à mémoire du terminal.
